# EUROPEAN PATENT SPECIFICATION

(11) **EP 2 497 983 B1**
(45) Date of publication and mention of the grant of the patent: **14.05.2014**
(21) Application number: 12158329.8
(22) Date of filing: 06.03.2012
(51) Int. Cl.: F16K 17/30, F16K 17/34, F16K 15/03, F16K 11/052

(54) **SAFETY VALVE FOR GAS PIPELINES**
SICHERHEITSVENTIL FÜR GASROHRLEITUNGEN
OBTURATEUR DE SECURITE POUR CONDUITES DE GAZ

(30) Priority: 07.03.2011 IT PD20110073
(43) Date of publication of application: 12.09.2012
(73) Proprietor: Eurostandard S.p.A., 38038 Tesero (TN) (IT)
(72) Inventor: Zeni, Marisa, I-38033 Cavalese (TN) (IT); Fontanazzi, Giuseppe, I-38033 Cavalese (TN) (IT); Raffaelli, Sara, I-38030 Varena (TN) (IT)
(74) Representative: Gallo, Luca

(56) References cited:
- WO-A1-2010/130724
- US-A- 3 293 389
- US-A- 5 004 010

## Description

### Field of application

The present invention refers to a safety valve for gas pipelines, according to the preamble of the main independent claim.

The present safety valve is intended to be used in the distribution networks of the gas for automatically blocking the gas flow in the presence of failures, i.e. when the flow rate of the gas exceeds a pre-established threshold value due to the failure.

The present invention is therefore situated in the field of the obtainment and installation of gas distribution networks and in particular in the industrial field of the production of connectors and automatic devices for intercepting gas leaks in order to ensure user safety.

### State of the art

As is known, the safety valves in the above-indicated field are usually mounted in the secondary pipelines close to their connection to a main pipeline.

The valves thus positioned are capable of automatically intercepting the gas flow in the secondary pipeline in case of leaks that can occur following accidental breakage or failure of the secondary pipelines, where a failure event is most likely to occur.

One of the most common causes of gas leaks lies in the breakage of a secondary pipeline caused by the installation of other embedded services, e.g. during the excavation for the installation or maintenance of sewer systems, hydraulic plants, electric plants or other systems.

Gas leaks are potentially dangerous for people; they also contribute to environmental pollution.

In normal operating conditions, the pressure inside the gas distribution networks is substantially at the same value. Therefore, in the flow rate range for which the secondary pipelines are sized, the pressure inside the main pipeline is equal to that inside the secondary pipelines placed in shunt from the main pipeline.

In such normal operating conditions, the valve is set in a provided open position, in which it allows the free flow of the gas from the main pipeline to the secondary pipeline.

Otherwise, when the safety valve is placed in the secondary pipeline downstream of the section in which a considerable and sudden variation of the gas pressure is verified, due to a sudden increase of the gas speed caused by the breakage of the tubing of the secondary pipeline, the valve is subjected to a pressure jump that determines its movement into a provided closed position, in which it interrupts or reduces the passage of the gas to non-dangerous levels.

Functionally, the safety valves must be automatically closed, passing from the aforesaid open position to the aforesaid closed position in a fraction of a second, when the pressure of the secondary duct downstream of the valve descends below a pre-established value.

Typically, for example, the gas flow is blocked by the safety valve, if the secondary pipeline has a failure that involves a leakage section with size equal to at least 5-15% with respect to the cross section.

Generally, safety valves are housed inside the secondary pipeline at the connection with the main pipeline and more particularly are mounted between two secondary pipeline portions by means of an electroweldable coupler sleeve.

Currently, different types of safety valves are present on the market, aimed to minimize the risk of gas losses due to failure in the secondary pipelines. Such valves are usually all provided with a support body, normally with tubular shape, coaxially mounted inside the secondary pipeline, which coaxially sustains a piston at its interior that is susceptible to slide along the axis of the pipeline and the valve.

Such safety valves have a behavior similar to that of the Venturi tube, having a narrowing downstream of the movable piston that causes an increase of the gas speed.

The piston is maintained in the open position during the normal functioning of the pipeline by a calibrated spring, which compensates for the pressure variation between the two sections: that of the enlarged section of the pipeline and that of the narrowed section of the valve.

The valve is closed after an increase of the pressure variation, and consequent increase of the gas speed downstream of the same.

More in detail, the sliding of the piston occurs between the open position, in which the piston allows the passage of the gas during the normal operation of the network, and the closed position, in which the piston, in case of failure, is set in contact with a ledge obtained in the chamber in order to interrupt the gas flow.

A loss of gas from the secondary pipeline is translated into an increase of the pressure difference on the piston; by overcoming the force exerted on the piston by the spring, such pressure difference causes the passage of the piston from the open position to the closed position.

The spring, in addition to the function of compensation of the moments in normal gas distribution operation, also performs the task of setting the safety threshold at which the valve closure will intervene, for an unexpected leakage of the gas.

In the calculation of the safety threshold, i.e. of the force which the spring must exert, the actual functioning conditions of the valve are considered (with compressible fluids and non-stationary motion) which come to modify the theoretical calculation parameters with suitable corrective factors.

Some safety valves widespread on the market, of the type briefly described above, are described in detail in the patents US4010770, WO 0188420, EP 686795 and US 4590962, for example.

More in detail, the valve described in the patent US4010770 provides for the use of a ball as a piston for interrupting the gas flow and of one or more metal springs for adjusting the position of the ball.

The valve described in the patent WO 0188420 provides for the use of a hollow piston having one portion with substantially cylindrical form facing towards the inner wall of the main body, and a head portion with rounded form, connected without interruption to the cylindrical portion and provided with a gasket adapted to seal the ledge of the main body. The ledge is obtained by means of a narrowing of the inner section.

The passage of the gas towards the valve during the normal operation of the network is ensured by a hole obtained on the rounded portion of the piston which affects the entire section of the chamber.

The spring is interposed between two shoulders, one obtained at the base of the cylindrical portion of the piston and the other in the wall of the chamber of the main body.

The patent EP 0686795 describes a safety valve that provides for the use of a rigid body, in which a cone-shaped chamber is provided that has a narrowing at one end. The valve is provided with a piston with pointed shape, with greater diameter than the narrowing of the chamber, susceptible to sliding inside the rigid body against the force of a spring in order to be abutted against the narrowing of the housing.

In practice, the safety valves of the above-described known type do not lack drawbacks.

A first drawback lies in the fact that the coaxial position of the piston, centered with respect to the pipeline section, i.e. where the speed of the gas is greater, causes considerable pressure losses.

Such position of the piston for intercepting the central flow of the gas is maintained during the normal functioning condition of the distribution network, and therefore causes - even in the presence of pistons with particularly tapered shape - the formation of considerable turbulence and then finally a non-negligible pressure loss.

A further drawback of the safety valves of known type lies in the fact that the impurities present in the conveyed gas flow can easily adhere to the piston placed to intercept the gas flow and thus prevent its correct functioning in case of failure. The same impurity deposits on the pistons also further increase the pressure losses.

US 5,004,010 describes a safety valve for gas pipelines, intended to be inserted in a gas pipeline for intercepting the flow of gas in case of leaks downstream of said safety valve, comprising: a support structure, which is intended to be fixed inside said gas pipeline, and provided with a tubular body intended to be coaxially sealingly mounted on the inner surface of said pipeline and to be crossed by said gas flow, a door hinged to said support structure at said tubular body, provided with an outer face and an inner face facing towards said tubular body, the door being movable between an open position, and a closed position, in which it is arranged so as to close said tubular body for intercepting said gas flow; elastically yieldable means acting on said door in order to force it with an elastic moment towards said open position; said door being subjected to: a first moment intended to rotate it towards said open position generated by the pressure of said gas flow on the inner face of said door; a second moment, greater than the first moment, intended to rotate said door towards said closed position, generated by the pressure of said gas flow on the outer face of said door and an elastic moment intended to rotate said door towards said open position.

### Presentation of the invention

The main object of the present invention is therefore that of overcoming the drawbacks manifested by the above-described prior art solutions, by providing a safety valve for gas pipelines which involves a reduced pressure loss.

Another object of the present finding is to provide a safety valve for gas pipelines which does not collect, or collects in a reduced manner, possible impurities that are conveyed by the gas flow.

Another object of the present finding is to provide a safety valve for gas pipelines whose functioning is simple and whose operation is entirely reliable.

A further object of the present finding is to provide a safety valve for gas pipelines which maintains its mechanical characteristics and its functionality unchanged over time.

A further object of the present finding is to provide a safety valve for gas pipelines which is inexpensive and easy to manufacture.

### Brief description of the drawings

The technical characteristics of the finding, according to the aforesaid objects, can be clearly seen in the contents of the claims reported below, and the advantages of the same will be clearer in the following detailed description, made with reference to the enclosed drawings, which represent a merely exemplifying and non-limiting embodiment thereof, in which:

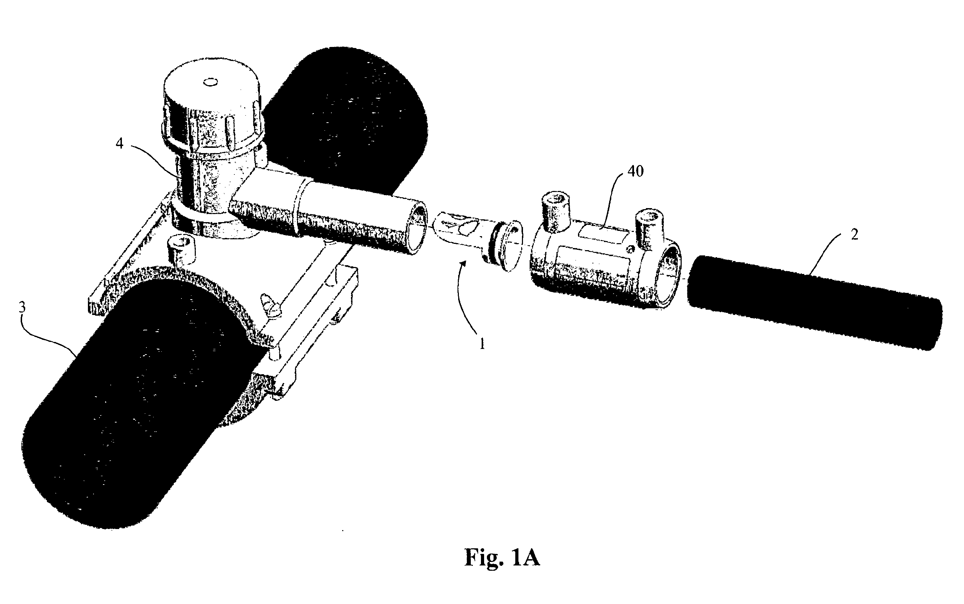

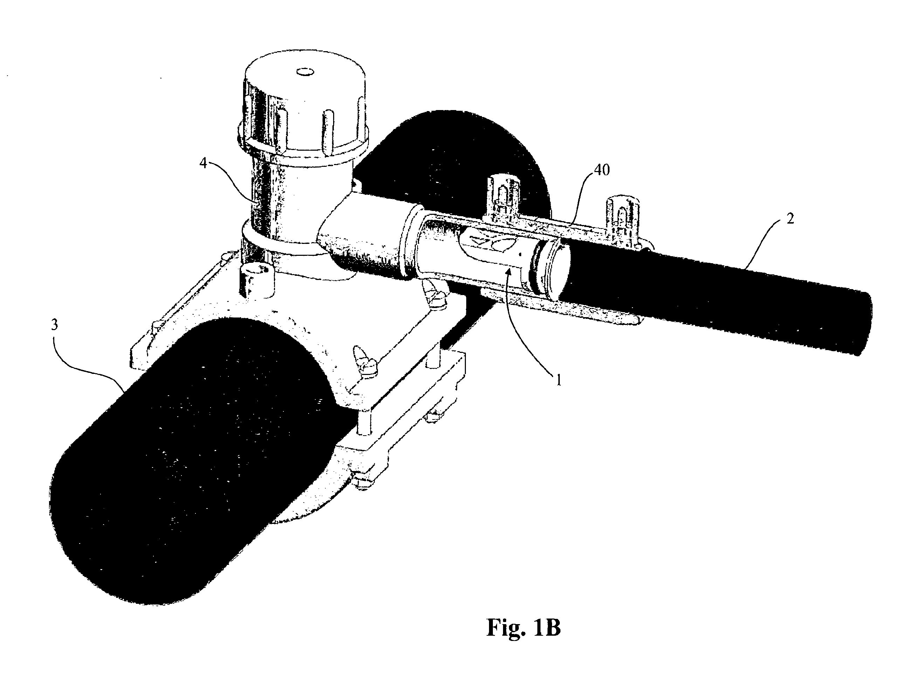

**FIGURES 1A** **and** **1B** show the safety valve, object of the present invention, mounted inside a pipeline for gas distribution, respectively in exploded perspective view and in a perspective view with some parts in section in order to better illustrate other parts;

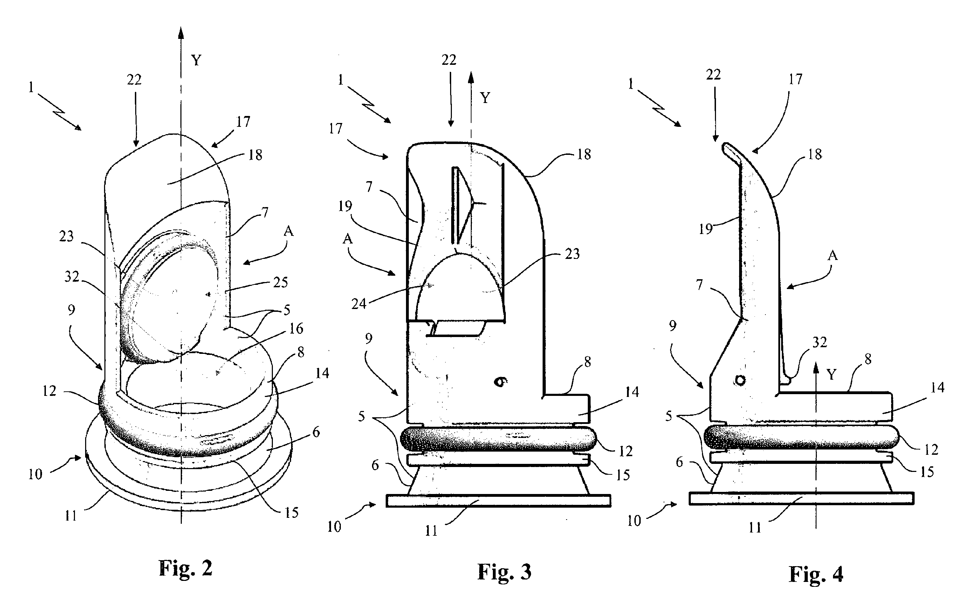

**FIG. 2** shows the aforesaid valve embodiment according to the present invention, in a front perspective view with a door provided in open position;
**FIG. 3** shows the valve of the preceding figures in rear perspective view with the door in open position;
**FIG. 4** shows the valve of the preceding figures in a side view with the door in open position;

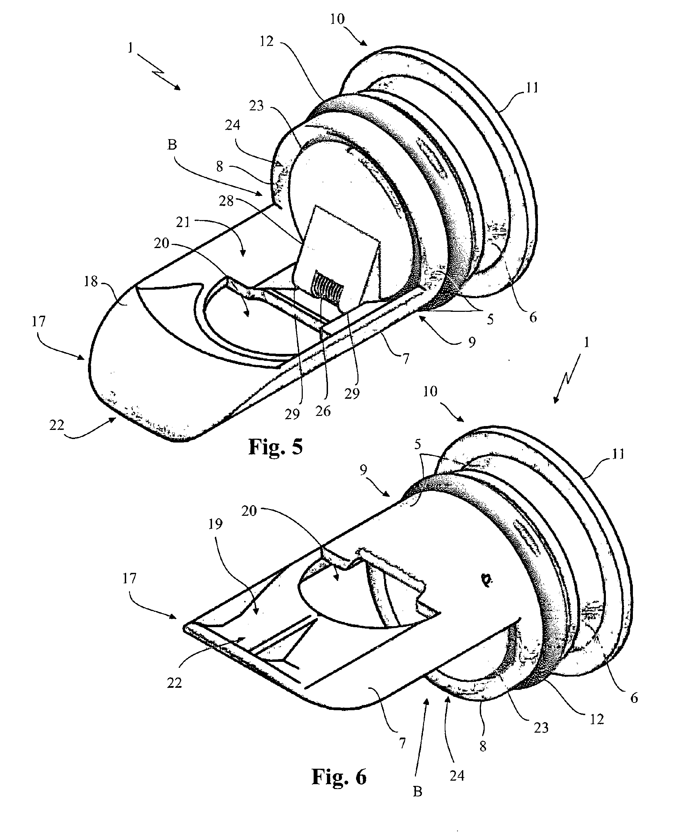

**FIG. 5** shows the valve of the preceding figures in a front perspective view with the door in closed position;
**FIG. 6** shows the valve of the preceding figures in a rear perspective view with the door in closed position;

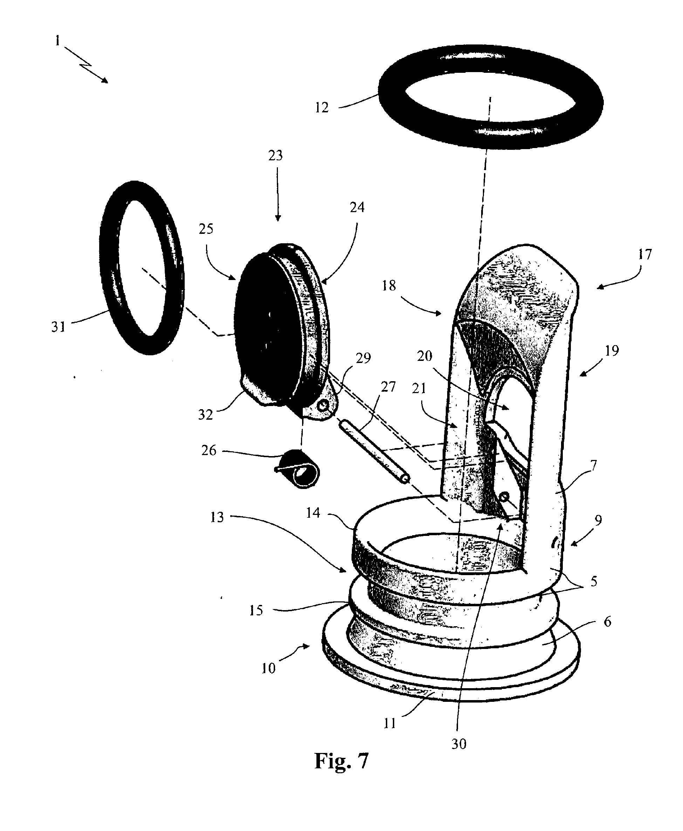

**FIG. 7** shows the valve of the preceding figures in a first exploded view;

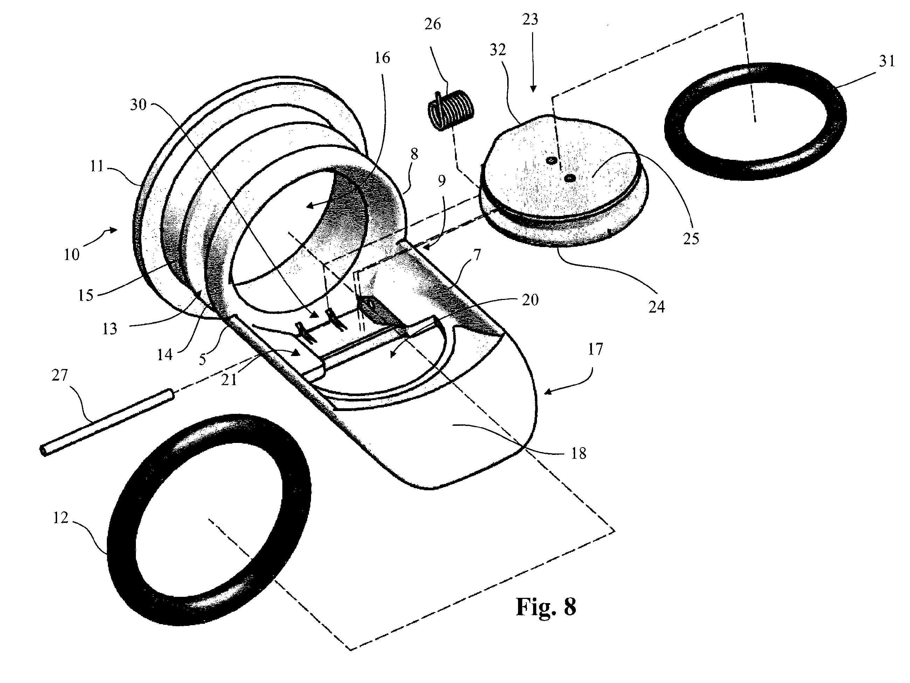

**FIG. 8** shows the valve of the preceding figures in a second exploded view;

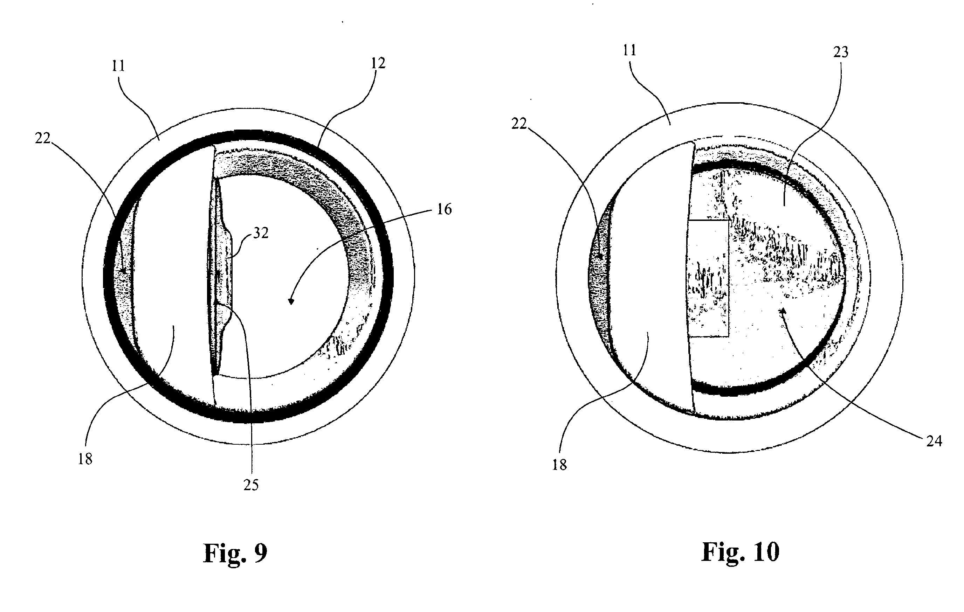

**FIG. 9** shows the valve of the preceding figures in a top view with the door in open position;
**FIG. 10** shows the valve of the preceding figures in a top view with the door in closed position, a provided first gasket having been removed in order to better underline other characteristics.

### Detailed description of several preferred embodiments

With reference to the enclosed drawings, the safety valve for gas pipelines, object of the present invention, is indicated in its entirety with 1.

The safety valve 1 is intended to be mounted inside a pipeline 2 of a gas distribution network and more particularly inside secondary pipelines placed in shunt from a main pipeline 3 and aimed to feed users such as homes, companies, offices etc.

Preferably, the safety valve 1 is inserted at a section of the secondary pipeline 2, between two sections of the latter and more precisely it is usually interposed, in a *per se* known manner, between the downstream end of an initial section of the secondary pipeline which is extended from the main pipeline 3 by means of a sleeve 4 fixed to the latter, and the upstream end of the remaining final section, with much greater length than the initial section, and having the task of conveying a gas flow from the main pipeline 3 to the users.

The two ends of the two sections of the secondary pipeline 2 are joined together with the safety valve 1 interposed by means of an electroweldable coupler 40.

Without departing from the protective scope of the present patent, the safety valve 1 that is the object of the present invention can also be interposed in any one other position between any two sections of a pipeline 2 for the gas transport and distribution, though below for the sake of simplicity reference will first of all be made to the more frequent case: that it is inserted in a secondary pipeline 2 for the transportation of the gas.

The safety valve 1 according to the invention is therefore adapted to intercept the gas flow in case of leaks that can occur downstream of its section of insertion in the secondary pipeline 2.

More in detail, the safety valve 1 comprises a support structure 5, which is intended to be fixed inside the secondary pipeline 2 and is formed by a tubular body 6, intended to be coaxially sealingly mounted on the inner surface of the secondary pipeline 2, and by an appendage 7, which is axially extended in projection from the tubular body 6.

Advantageously, the tubular body 6 and the appendage 7 are obtained in a single body made of plastic material.

The tubular body 6 terminates at one end thereof with a first edge 8 (intended to be facing towards the initial segment of the secondary pipeline 2), with preferably flared shape, and from one base segment 9 thereof (intended to be facing towards the final segment of the secondary pipeline 2) the aforesaid appendage 7 is extended; the tubular body 6 terminates at the other end thereof with a second edge 10, from which an annular lip 11 is extended that is susceptible to abut against the mouth of a section of the secondary pipeline 2, in particular its initial segment.

The seal of the tubular body 6 on the inner surface of the secondary pipeline 2 is ensured by a first gasket 12, mounted outside the tubular body 6 and preferably in a seat 13 defined between an undercut 14 obtained underneath the first edge 8 and an annular rib 15, which projects from the outer surface of the same tubular body 6.

The safety valve 1 is then inserted inside the secondary pipeline 2 in a manner so as to convey the gas flow to cross through the provided through hole 16 of the tubular body 6.

The safety valve 1 is extended in the direction of the axis Y of the tubular body 6, coinciding with the axis of the secondary pipeline 2 in which the valve 1 is inserted, in a manner such that it is arranged next to the inner surface of the same pipeline 2.

The appendage 7 with its bulk reduces the passage section of the gas flow of the secondary pipeline 2; such section is therefore greater at the undisturbed section placed upstream of the appendage 7 than at the appendage 7 (i.e. than at the section along the entire valve 1).

The appendage 7 is therefore axially extended from the base section 9 (particularly in the shape of an annular sector) of the first edge 8 of the tubular body 6 up to a free end 17 that is arranged, with the valve 1 mounted in the secondary pipeline 2, at a substantially undisturbed section of the gas flow of the same pipeline 2.

The appendage 7 preferably has the shape of a tongue with the free end 17 tapered in order to reduce the pressure losses, and is provided with an inner surface 18, facing towards the axis Y of the tubular body 6, and an outer surface 19, which is facing towards the pipeline 2 with the valve 1 inserted in the latter.

In accordance with the idea underlying the present invention, the appendage 7 is further provided with: a through opening 20, which is extended between its two surfaces 18, 19 transverse to the axis Y of the tubular body 6; a seat 21, which is obtained at inner surface 18 and which is at least partially facing towards the through opening 20, and a connection channel 22, which is extended from its free end 17 up to the through opening 20.

The aforesaid connection channel 22 has the function of substantially balancing the pressure present in the undisturbed section with that present on the outer surface 19 of the appendage at through opening 20, in order to allow the automatic actuation of the valve 1, as will be explained below.

The channel remains advantageously defined inside the appendage 7 or, preferably, between the outer surface 19 of the appendage 7 and the inner surface of the secondary gas pipeline 2. For such purpose, in the latter case, the appendage 7 is shaped in order to be spaced in at least one sector thereof from the inner surface of the secondary pipeline 2 and preferably is provided with a convexity less than the concavity of the secondary pipeline.

According to the invention, the safety valve 1 also comprises a door 23 hinged to the support structure 5 at the tubular body 6, provided with an outer face 24 substantially facing towards the appendage 7 and an inner face 25 facing towards the tubular body 6.

The door 23 is movable between an open position A, in which it is arranged next to the appendage 7 and is inserted in the seat 21 with its outer face 24 placed so as to close the through opening 20, and a closed position B, in which it is placed to close the tubular body 6 for intercepting the gas flow.

Elastically yieldable means 26 act on the door 23 in order to force it with an elastic moment towards the open position A.

Advantageously, the elastically yieldable means 26 are obtained with a spring, preferably of helical type, wound around a pin 27 hinged on the support structure 5, preferably at the base of the appendage 7, and provided with one end in abutment against the support structure 5 and with one end acting against the door 23.

In accordance with a preferred embodiment of the present invention, the door 23 is provided with at least one protruding flap 28, which defines a seat for housing the spring 26 between two shoulders 29. Such flap 28 is inserted in a niche 30 obtained at the base of the appendage 7 underneath the through opening. The pin 27 crosses through the two shoulders 29, transversely with respect to the axis Y of the tubular body 6, and is pivoted on the side faces of the niche 30.

In accordance with the above-described mechanical configuration, the door 23 is subjected to: a first moment intended to rotate it towards the open position A generated by the pressure of the gas flow on the inner face 25 of the door 23 itself; a second moment greater than the first, intended to rotate said door towards the closed position B, generated by the pressure of the gas flow through the opening 20 on the outer face 24 of the door 23; and an elastic moment intended to rotate the door 23 towards the opening position A.

Operatively, the door 23 is susceptible to be moved between the open position A and the closed position B after a pressure increase between the inner face 25 and the outer face 24 facing towards the opening 20 of the door 23, produced by a flow increase towards the safety valve 1 after a failure event in the secondary pipeline downstream of the valve 1 itself.

More in detail, the door 23 is suitable for remaining in open position A, in normal operating conditions, i.e. if the gas flow in the pipeline 2 is less than a threshold value. In such condition, the gas flow generates a pressure difference between the inner face 25 and the outer face 24 facing towards the opening 20 of the door 23, to which an overall moment on the door 23 itself corresponds, such moment produced by the corresponding forces due to the aforesaid pressures of the gas flow on the inner face 25 and on the outer face 24 facing towards the opening 20 of the door 23; such moment is less than the moment exerted by the spring 26 and therefore maintains the door 23 stably in the open position A, allowing the outflow of gas into the secondary pipeline 2.

The door 23 is instead suitable for being moved in closed position B in the presence of a failure event in the secondary pipeline 2 downstream of the safety valve 1, i.e. in the presence of a gas flow in the same pipeline 2 greater than the threshold value. In such condition, the gas flow generates a pressure difference between the inner face 25 and the outer face 24 facing towards the through opening 20 of the door 23, to which an overall moment on the door 23 itself corresponds, such moment produced by the corresponding forces due to the aforesaid pressures of the gas flow on the inner face 25 and on the outer face 24 facing towards through the opening 20 of the door 23; such moment is greater than the moment exerted by the spring 26 and therefore involves the sudden movement of the door 23 into the closed position B.

The size of the opening 20 is calibrated in order to determine a force on the portion facing thereto of the outer face 24 of the door 23 that is greater than the force exerted by the pressure on the inner face 25 of the door 23.

The pressure difference between the two faces 24, 25 of the door 23 is due to the narrowing produced by the appendage 7. More in detail, the abovementioned connection channel 22 sets the pressure behind the door 23, on its outer face 24 at the opening 20, substantially at the same pressure present in the undisturbed section upstream of the valve, where the connection channel 22 starts. Such pressure behind the door 23 is greater than that which is present in front of the door 23, i.e. on its inner face 25, due to the presence of the narrowing of the section of the pipeline 2 determined by the bulk of the valve 1 and in particular of its appendage 7.

In such condition, a failure event determines an increase of the pressure drop Δp between the two faces 24, 25 of the door 23 with the formation of a consequent overall moment due to the pressure forces, which is no longer balanced by the moment of the spring 26 and which leads to the closure of the door 23 itself.

In accordance with a preferred characteristic of the present invention, the door 23 when arranged in the open position A is introduced in the seat 21 to a depth which shelters it from the gas flow.

As soon as the failure event occurs and the moment of the spring 26 is no longer able to balance the resultant of the pressure moments on the two faces of the door 23, the latter is moved, rotating into a position for intercepting the flow, which then rapidly drives the door into the closed position B on the first flared edge 8 of the tubular body 6.

Advantageously, the door 23, preferably of circular form, bears a second gasket 31 mounted in an annular manner on its thickness, such gasket suitable for sealing on the flared edge 8 of the tubular body 6.

In accordance with one embodiment of the present invention, a projection 32 is further provided for, which is extended from the inner face 25 of the door 23 and is susceptible to interfere with the gas flow when the door 23 is in the open position A.

The projection 32 projects from the seat 21 and intercepts the gas flow, causing an additional moment intended to rotate the door 23 towards the closed position B. In normal operating conditions, such additional moment is balanced, together with the resultant moment due to the pressures of the gas flow on the two faces 24, 25 of the door 23, by the elastic moment exerted by the spring 26. Such additional moment increases with the increase of the gas flow, and therefore increases the imbalance in case of failure event, facilitating the passage of the door from the open position A to the closed position B.

The finding thus conceived therefore achieves the pre-established objects.

Of course, in the practical obtainment thereof, the finding can also assume forms and configurations that are different from that illustrated above, without departing from the present protective scope.

In addition, all details can be substituted with technically equivalent elements and the size, shapes and materials employed can be of any type according to requirements.

## Claims

1. Safety valve for gas pipelines, intended to be inserted in a gas pipeline (2) for intercepting the flow of gas in case of leaks downstream of said safety valve, comprising:
• a support structure (5), which is intended to be fixed inside said gas pipeline (2), and provided with:
○ a tubular body (6) intended to be coaxially sealingly mounted on the inner surface of said pipeline (2) and to be crossed by said gas flow, and
○ an appendage (7) which:
■ is axially extended from said tubular body (6), reducing the section of said pipeline (2), up to a free end (17) intended to be placed at a substantially undisturbed section of the gas flow in said pipeline (2);
■ has an inner surface (18) facing towards the axis (Y) of said tubular body (6) and an outer surface (19) intended to face towards the inner surface of said pipeline (2),
■ is provided with a through opening (20) that is extended between said outer surface (19) and said inner surface (18);
■ delimits at least one connection channel (22), which is extended from the free end (17) of said appendage (7) up to said through opening (20);
• a door (23) hinged to said support structure (5) at said tubular body (6), provided with an outer face (24) facing towards said appendage (7) and an inner face (25) facing towards said tubular body (6), movable between an open position (A), in which it is arranged next to said appendage (7) with the outer face (24) arranged so as to close said through opening (20), and a closed position (B), in which it is arranged so as to close said tubular body (6) for intercepting said gas flow;
• elastically yieldable means (26) acting on said door (23) in order to force it with an elastic moment towards said open position (A);
said door (23) being subjected to:
○ a first moment intended to rotate it towards said open position (A) generated by the pressure of said gas flow on the inner face (25) of said door (23);
○ a second moment, greater than the first moment, intended to rotate said door (23) towards said closed position (B), generated by the pressure of said gas flow on the outer face (24) of said door (23) facing towards said through opening (20) and
○ an elastic moment intended to rotate said door (23) towards said open position (A).

2. Safety valve according to claim 1, **characterized in that** said door (23) is susceptible to be moved from said open position (A) to said closed position (B) after a pressure increase between the inner face (25) and the outer face (24) facing towards said opening (20) of said door (23), produced by a flow increase through said safety valve (1) following a failure event in the pipeline (2) downstream of said safety valve (1) itself.

3. Safety valve according to claim 1, **characterized in that** said door (23) is adapted to remain in open position (A) with a gas flow lower than a threshold value and susceptible to generate a pressure difference between the inner face (25) and the outer face (24) facing towards said through opening (20) of said door (23), to which an overall moment on said door (23) corresponds - such moment produced by the forces of the aforesaid pressures on the inner face (25) and on the outer face (24) facing towards said opening (20) of said door (23) - that is lower than the moment of said elastically yieldable means (26).

4. Safety valve according to claim 1, **characterized in that** said door (23) is intended to be moved into closed position (B) with a gas flow greater than a threshold value and susceptible to generate a pressure difference between the inner face (25) and the outer face (24) facing towards said through opening (20) of said door (23), to which an overall moment on said door (23) corresponds - such moment produced by the forces of the aforesaid pressures on the inner face (25) and on the outer face (24) facing towards said opening (20) of said door (23) - that is greater than the moment of said elastically yieldable means (26).

5. Safety valve according to any one of the preceding claims, **characterized in that** the appendage (7) is provided with a seat (21) obtained at said inner surface (18), at least partially facing towards said through opening (20), which is susceptible to house said door (23) in open position (A).

6. Safety valve according to claim 5, **characterized in that** said door (23) in said open position (A) is introduced in said seat (21) to a depth which shelters it from said gas flow.

7. Safety valve according to any one of the preceding claims, **characterized in that** the free end (17) of the appendage (7) is tapered in order to reduce the pressure losses.

8. Safety valve according to any one of the preceding claims, **characterized in that** the outer surface (19) of said appendage (7) is shaped so as to define, with said pipeline (2), said connection channel (22).

9. Safety valve according to claim 8, **characterized in that** the outer surface (19) of said appendage (7) is provided with at least one segment with convexity smaller than the concavity of said pipeline (2), in which said valve (1) is susceptible to be inserted.

10. Safety valve according to any one of the preceding claims, **characterized in that** said door (23) is provided with at least one protruding flap (28), which is housed in a niche (30) obtained at the base of said appendage (7) underneath said through opening (20), at least one pin (27) being provided pivoted on side faces of said niche (30) and inserted in a through hole transversely obtained in said flap (28).

11. Safety valve according to any one of the preceding claims, **characterized in that** said tubular body (6) is provided with a first edge (8) from which said appendage (7) is extended, which is provided with a flared shape.

12. Safety valve according to claim 11, **characterized in that** said tubular body (6) bears a first gasket (12) externally mounted, in particular inserted in a annular seat (13) defined between an undercut (14) obtained underneath said first edge (8) and an annular rib (15) externally projecting from said tubular body (6), such gasket suitable for sealing the inner surface of said pipeline (2).

13. Safety valve according to any one of the preceding claims, **characterized in that** said tubular body (6) is provided with a second edge (10) from which an annular lip (11) is extended which is susceptible to abut against the mouth of a section of said gas pipeline (2).

14. Safety valve according to claim 11, **characterized in that** said door (23) bears a second gasket (31) mounted in an annular manner, suitable for sealing said door (23) in closed position (B) on said first flared edge (8) of said tubular body (6).

15. Safety valve according to any one of the preceding claims, **characterized in that** it comprises a projection (32) extended from said inner face (25) of said door (23) which is susceptible to interfere with said gas flow, with said door (23) in open position (A), and generate an additional moment intended to rotate said door (23) towards said closed position (B), such additional moment increasing with the increase of said gas flow in order to facilitate the passage of said door (23) from said open position (A) to said closed position (B) in case of failure.

## Patentansprüche

1. Sicherheitsventil für Gasrohrleitungen, das dazu bestimmt ist, in eine Gastransportleitung (2) eingesetzt zu werden, um im Fall von Leckagen den Fluss nach dem genannten Sicherheitsventil zu erfassen, und Folgendes umfasst:
• eine Trägerstruktur (5), die dazu bestimmt ist, innen an der genannten Gastransportleitung (2) befestigt zu werden und mit Folgendem ausgestattet ist:
○ mit einem Rohrkörper (6), der dazu bestimmt ist, koaxial hermetisch an der Innenfläche der genannten Gastransportleitung (2) montiert und vom genannten Gasfluss durchströmt zu werden und
○ mit einem Zusatzstück (7), das:
■ axial von dem genannten Rohrkörper (6) verläuft und den Querschnitt der genannten Gastransportleitung (2) bis zu einem freien Ende (17) verringert, das dazu bestimmt ist, auf einem im Wesentlichen von Hindernissen freien Abschnitt des Gasflusses in der genannten Gastransportleitung (2) angeordnet zu werden;
■ eine Innenfläche (18) aufweist, die zur Achse (Y) des genannten Rohrkörpers (6) gerichtet ist und eine Außenfläche (19), die dazu bestimmt ist, zur Innenfläche der genannten Gastransportleitung (2) zu zeigen,
■ mit einer durchgehenden Öffnung (20) versehen ist, die zwischen der genannten Außenfläche (19) und der genannten Innenfläche (18) verläuft;
■ mindestens einen Anschlusskanal (22) begrenzt, der von dem freien Ende (17) des genannten Zusatzstücks (7) bis zu der genannten durchgehenden Öffnung (20) verläuft;
• eine Klappe (23), die an der genannten Trägerstruktur (5) auf dem genannten Rohrkörper (6) mit Gelenk befestigt ist, die mit einer Außenfläche (24) ausgestattet ist, die zu dem genannten Zusatzstück (7) gerichtet ist und mit einer Innenfläche (25), die zu dem genannten Rohrkörper (6) gerichtet und zwischen einer geöffneten Position (A), in der sie an dem genannten Zusatzstück (7) anliegt, und einer geschlossenen Position (B), in der sie mit dem genannten Rohrkörper (6) zum Erfassen des genannten Gasflusses abschließt, beweglich ist;
• elastisch nachgiebige Elemente (26), die auf die genannte Klappe (23) wirken, um sie mit einem elastischen Moment in die geöffnete Position (A) zu bringen;
wobei auf die genannte Klappe (23) Folgendes wirkt:
o ein erstes Moment, das dazu dient, sie in die genannte geöffnete Position (A) zu drehen, das durch den Druck des genannten Gasflusses auf die Innenfläche (25) der genannten Klappe (23) erzeugt wird;
o ein zweites Moment, das stärker als das erste wirkt und dazu dient, die genannte Klappe (23) in die genannte geschlossene Position (B) zu drehen, das durch den Druck des genannten Gasflusses auf die Außenfläche (24) der genannten Klappe (23) erzeugt wird, die zu der genannten durchgehenden Öffnung (20) gerichtet ist und
o ein elastisches Moment, das dazu dient, die genannte Klappe (23) in die genannte geöffnete Position (A) zu drehen.

2. Sicherheitsventil nach Anspruch 1, **dadurch gekennzeichnet dass**, die genannte Klappe (23) geeignet ist, sich im Anschluss an einen Anstieg des Drucks, der durch einen Anstieg des Flusses durch das genannte Sicherheitsventil (1) im Anschluss an einen Schaden in der Gastransportleitung (2) nach dem genannten Sicherheitsventil (1) zwischen der Innenfläche (25) und der Außenfläche (24), die der genannten Öffnung (20) der genannten Klappe (23) gegenüberliegt, aus der genannten geöffneten Position (A) in die genannte geschlossene Position (B) zu bewegen.

3. Sicherheitsventil nach Anspruch 1, **dadurch gekennzeichnet, dass** die genannte Klappe (23) geeignet ist, bei einem Gasfluss unter einem Grenzwert in der geöffneten Position (A) zu bleiben und einen Druckunterschied zwischen der Innenfläche (25) und der Außenfläche (24), die der genannten durchgehenden Öffnung (20) der genannten Klappe gegenüberliegt, zu erzeugen, dem ein Gesamtmoment auf die genannte Klappe (23) entspricht, das von den Kräften der oben genannten Drücke auf die Innenfläche (25) und die Außenfläche (24), die der genannten Öffnung (20) der genannten Klappe (23) gegenüberliegt, erzeugt wird, das geringer als das Moment der genannten elastisch nachgiebigen Elemente (26) ist.

4. Sicherheitsventil nach Anspruch 1, **dadurch gekennzeichnet, dass** die genannte Klappe (23) dazu bestimmt ist, sich bei einem Gasfluss über einem Grenzwert in die geschlossene Position (B) zu bewegen und einen Druckunterschied zwischen der Innenfläche (25) und der Außenfläche (24), die der genannten durchgehenden Öffnung (20) der genannten Klappe gegenüberliegt, zu erzeugen, dem ein Gesamtmoment auf die genannte Klappe (23) entspricht, das von den Kräften der oben genannten Drücke auf die Innenfläche (25) und die Außenfläche (24), die der genannten Öffnung (20) der genannten Klappe (23) gegenüberliegt, erzeugt wird, das größer als das Moment der genannten elastisch nachgiebigen Elemente (26) ist.

5. Sicherheitsventil nach einem beliebigen der vorangegangenen Ansprüche, **dadurch gekennzeichnet, dass** das Zusatzstück (7) mit einem Sitz (21) ausgestattet ist, der sich auf der genannten Innenfläche (18) befindet, die zumindest teilweise der genannten durchgehenden Öffnung gegenüberliegt, der geeignet ist, die genannten Klappe (23) in geöffneter Position (A) aufzunehmen.

6. Sicherheitsventil nach Anspruch 5, **dadurch gekennzeichnet, dass** die genannten Klappe (23) in der genannten geöffneten Position (A) in den genannten Sitz (21) bis zu einer Tiefe aufgenommen wird, der sie vor dem genannten Gasfluss schützt.

7. Sicherheitsventil nach einem beliebigen der vorangegangenen Ansprüche, **dadurch gekennzeichnet, dass** das freie Ende (17) des Zusatzstücks (7) sich verjüngt, um die Lastverluste zu verringern.

8. Sicherheitsventil nach einem beliebigen der vorangegangenen Ansprüche, **dadurch gekennzeichnet, dass** die Außenfläche (19) des genannten Zusatzstücks (7) so geformt ist, dass sie mit der genannten Gastransportleitung (2) den genannten Verbindungskanal (22) bildet.

9. Sicherheitsventil nach Anspruch 8, **dadurch gekennzeichnet, dass** die Außenfläche (19) des genannten Zusatzstücks (7) mindestens einem Abschnitt mit einer Konvexität aufweist, die geringer als die Konkavität der genannten Gastransortleitung (2) ist, in die das genannte Ventil (1) eingesetzt werden kann.

10. Sicherheitsventil nach einem beliebigen der vorangegangenen Ansprüche, **dadurch gekennzeichnet, dass** die genannte Klappe (23) mit mindestens einem vorstehenden Flügel (28) versehen ist, der in einer Nische (30) untergebracht ist, die sich auf der Basis des genannten Zusatzstücks (7) unter der genannten durchgehenden Öffnung (20) befindet, mit mindestens einem Zapfen (27), da sie auf den seitlichen Flächen der genannten Nische (30) gelagert vorgesehen ist und in eine durchgehende Öffnung eingesetzt, die quer in dem genannten Flügel (28) verläuft.

11. Sicherheitsventil nach einem beliebigen der vorangegangenen Ansprüche, **dadurch gekennzeichnet, dass** der genannten Rohrkörper (6) mit einem ersten Rand (8) versehen ist, von dem aus das genannten Zusatzstück (7) verläuft, das mit einer aufgeweiteten Form ausgestattet ist.

12. Sicherheitsventil nach Anspruch 11, **dadurch gekennzeichnet, dass** der genannte Rohrkörper (6) eine erste, außen montierte Dichtung (12) aufweist, die insbesondere in einen ringförmigen Sitz (13) eingesetzt ist, der zwischen einer Hinterschneidung (14) unter dem genannten ersten Rand (8) und einer ringförmigen Rippe (15) gebildet wird, die außen von dem genannten Rohrkörper (6) vorsteht und geeignet ist, die Innenfläche der genannten Gastransportleitung (2) abzudichten.

13. Sicherheitsventil nach einem beliebigen der vorangegangenen Ansprüche, **dadurch gekennzeichnet, dass** der genannten Rohrkörper (6) mit einem zweiten Rand (10) versehen ist, von dem aus eine ringförmige Lippe (11) verläuft, die geeignet ist, an der Öffnung eines Abschnitts der genannten Gastransportleitung (2) anzuliegen.

14. Sicherheitsventil nach Anspruch 11, **dadurch gekennzeichnet, dass** auf der genannten Klappe (23) ringförmig eine zweite Dichtung (31) montiert ist, die geeignet ist, die genannte Klappe (23) in geschlossener Position (B) auf dem genannten aufgeweiteten ersten Rand (8) des genannten Rohrkörpers (6) abzudichten.

15. Sicherheitsventil nach einem beliebigen der vorangegangenen Ansprüche, **dadurch gekennzeichnet, dass** es einen Vorsprung (32) umfasst, der von der genannten Innenfläche (25) der genannten Klappe (23) aus verläuft, die in der Lage ist, den genannten Gasfluss bei genannter Klappe (23) in geöffneter Position (A) zu erfassen und ein zusätzliches Moment zu erzeugen, das dazu dient, die genannte Klappe (23) in die genannte geschlossene Position (B) zu drehen, wobei das zusätzliche Moment bei der Erhöhung des genannten Gasflusses zunimmt, um bei einem Schaden den Wechsel der genannten Klappe (23) aus der genannten geöffneten Position (A) in die genannte geschlossene Position (B) zu begünstigen.

## Revendications

1. Obturateur de sécurité pour conduites de gaz, destiné à être inséré dans une conduite de transport (2) du gaz pour en arrêter l'écoulement en cas de fuites en aval dudit obturateur de sécurité comprenant :
• une structure de support (5), destinée à être fixée à l'intérieur de ladite conduite de transport (2) du gaz et munie :
○ d'un corps tubulaire (6) destiné à être monté coaxialement de façon étanche sur la surface interne de ladite conduite de transport (2) et à être traversé par ledit écoulement de gaz et
○ d'une appendice (7) qui :
■ s'étend axialement dudit corps tubulaire (6), réduisant la section de ladite conduite de transport (2), jusqu'à une extrémité libre (17) destinée à se placer au niveau d'une section essentiellement non dérangée de l'écoulement de gaz dans ladite conduite de transport (2) ;
■ a une surface interne (18) tournée vers l'axe (Y) dudit corps tubulaire (6) et une surface externe (19) destinée à se tourner vers la surface interne de ladite conduite (2),
■ est munie d'une ouverture traversante (20) qui se développe entre ladite surface externe (19) et ladite surface interne (18) ;
■ délimite au moins un canal de liaison (22), qui se développe de l'extrémité libre (17) de ladite appendice (7) jusqu'à ladite ouverture traversante (20) ;
• un clapet (23) articulé sur ladite structure de support (5) au niveau dudit corps tubulaire (6), muni d'une face externe (24) tournée vers ladite appendice (7) et d'une face interne (25) tournée vers ledit corps tubulaire (6), mobile entre une position ouverte (A), dans laquelle est approché de ladite appendice (7) avec la face externe (24) servant de fermeture de ladite ouverture traversante (20) et une position fermée (B), dans laquelle sert de fermeture audit corps tubulaire (6) pour arrêter ledit écoulement de gaz ;
• des moyens élastiquement souples (26) agissant sur ledit clapet (23) pour le forcer par un moment élastique vers ladite position ouverte (A) ;
ledit clapet (23) étant soumis à :
○ un premier moment destiné à le faire tourner vers ladite position ouverte (A) généré par la pression dudit écoulement de gaz sur la face interne (25) dudit clapet (23) ;
○ un second moment, d'ampleur plus grande que celle du premier moment, destiné à faire tourner ledit clapet (23) vers ladite position fermée (B), généré par la pression dudit écoulement de gaz sur la face externe (24) dudit clapet (23) donnant sur ladite ouverture traversante (20) et
○ un moment élastique destiné à faire tourner ledit clapet (23) vers ladite position ouverte (A).

2. Obturateur de sécurité selon la revendication 1, **caractérisé en ce que** ledit clapet (23) est susceptible de se déplacer de ladite position ouverte (A) à ladite position fermée, à la suite d'une augmentation de pression entre la face interne (25) et la face externe (24) donnant sur ladite ouverture (20) dudit clapet (23) produite par une augmentation d'écoulement à travers dudit obturateur de sécurité (1) à la suite d'un événement de panne dans la conduite de transport (2) en aval dudit obturateur de sécurité (1) lui-même.

3. Obturateur de sécurité selon la revendication 1, **caractérisé en ce que** ledit clapet (23) est apte à rester en position ouverte (A) avec un écoulement de gaz inférieur à une valeur de seuil, susceptible de générer une différence de pressions entre la face interne (25) et la face externe (24) donnant sur ladite ouverture traversante (20) dudit clapet (23), à laquelle correspond un moment total sur ledit clapet (23) produit par les forces desdites pressions sur la face interne (25) et sur la face externe (24) donnant sur ladite ouverture (20) dudit clapet (23), inférieur au moment desdits moyens élastiquement souples (26).

4. Obturateur de sécurité selon la revendication 1, **caractérisé en ce que** ledit clapet (23) est destiné à se déplacer en position fermée (B) avec un écoulement de gaz supérieur à une valeur de seuil et susceptible de générer une différence de pressions entre la face interne (25) et la face externe (24) donnant sur ladite ouverture traversante (20) dudit clapet (23), à laquelle correspond un moment total sur ledit clapet (23) produit par les forces desdites pressions sur la face interne (25) et sur la face externe (24) donnant sur ladite ouverture (20) dudit clapet (23), supérieur au moment desdits moyens élastiquement souples (26).

5. Obturateur de sécurité selon une quelconque des revendications précédentes, **caractérisé en ce que** l'appendice (7) est munie d'un siège (21) situé au niveau de ladite surface interne (18), au moins partiellement donnant sur ladite ouverture traversante (20), laquelle est susceptible de loger ledit clapet (23) en position ouverte (A).

6. Obturateur de sécurité selon la revendication 5, **caractérisé en ce que** ledit clapet (23) dans ladite position ouverte (A) est introduit dans ledit siège (21) à une profondeur qui le met à l'abri dudit écoulement de gaz.

7. Obturateur de sécurité selon une quelconque des revendications précédentes, **caractérisé en ce que** l'extrémité libre (17) de l'appendice (7) est diminuée pour réduire les pertes de charge.

8. Obturateur de sécurité selon une quelconque des revendications précédentes, **caractérisé en ce que** la surface externe (19) de ladite appendice (7) est profilée pour définir avec ladite conduite de transport (2) ledit canal de liaison (22).

9. Obturateur de sécurité selon la revendication 8, **caractérisé en ce que** la surface externe (19) de ladite appendice (7) est munie d'au moins une portion avec convexité inférieure à la concavité de ladite conduite de transport (2) dans laquelle ledit obturateur (1) est susceptible de s'insérer.

10. Obturateur de sécurité selon une quelconque des revendications précédentes, **caractérisé en ce que** ledit clapet (23) est muni d'au moins une aile saillante (28), laquelle est logée dans une niche (30) située à la base de ladite appendice (7) au-dessous de ladite ouverture traversante (20), au moins un axe étant prévu monté sur les faces latérales de ladite niche (30) et inséré dans un trou traversant percé transversalement dans ladite aile (28).

11. Obturateur de sécurité selon une quelconque des revendications précédentes, **caractérisé en ce que** ledit corps tubulaire (6) est muni d'un premier bord (8) duquel sort ladite appendice (7), lequel est pourvu d'une forme évasée.

12. Obturateur de sécurité selon la revendication 11, **caractérisé en ce que** ledit corps tubulaire (6) porte, monté à l'extérieur un premier joint (12), notamment inséré dans un siège annulaire (13) défini entre une contre-dépouille (14) située au-dessous dudit premier bord (8) et une nervure annulaire (15) dépassant à l'extérieur dudit corps tubulaire (6), apte a fournir étanchéité à la surface interne de ladite conduite de transport (2).

13. Obturateur de sécurité selon une quelconque des revendications précédentes, **caractérisé en ce que** ledit corps tubulaire (6) est muni d'un second bord (10) duquel se développe une lèvre annulaire (11) susceptible de venir en appui sur la bouche d'une section de ladite conduite de transport (2) du gaz.

14. Obturateur de sécurité selon la revendication 11, **caractérisé en ce que** ledit clapet (23) porte, monté en mode annulaire, un second joint (31) apte à fournir étanchéité avec ledit clapet (23) en position fermée (B) sur ledit premier bord évasé (8) dudit corps tubulaire (6).

15. Obturateur de sécurité selon une quelconque des revendications précédentes, **caractérisé en ce qu'**il comprend une saillie (32) s'étendant de la face interne (25) dudit clapet (23) laquelle est susceptible d'interférer avec ledit écoulement de gaz, avec ledit clapet (23) en position ouverte (A) et générer un moment supplémentaire destiné à tourner ledit clapet (23) vers ladite position fermée (B), lequel moment supplémentaire augmente avec l'augmentation dudit écoulement de gaz pour favoriser le passage dudit clapet (239 de ladite position ouverte (A) à ladite position fermée (B) en cas de panne.
